# EUROPEAN PATENT APPLICATION

(11) **EP 4 597 151 A1**
(43) Date of publication of application: **06.08.2025**
(21) Application number: 24154803.1
(22) Date of filing: 30.01.2024
(51) Int. Cl.: G01S 7/00, G01S 7/41, G01S 13/58, G01S 13/87, G01S 13/931

(54) **METHOD TO PROVIDE A MOVEMENT INFORMATION ABOUT AT LEAST ONE SECOND VEHICLE BY A FIRST VEHICLE AND RADAR SYSTEM**

(71) Applicant: VOLKSWAGEN AG, 38440 Wolfsburg (DE); Scania CV AB, 151 87 Södertälje (SE)
(72) Inventor: Kurz, Dr. Heiko, 30177 Hannover (DE); Gisder, Dr. Thomas, 38446 Wolfsburg (DE); Meinecke, Dr. Marc-Michael, 38524 Sassenburg (DE); Johansson, Mikael, 15594 Nykvarn - Schweden (SE)
(74) Representative: Hofstetter, Schurack & Partner

(57) **Abstract**

The invention relates to a method to provide a movement information (14) about at least one second vehicle (5) by a first vehicle (1), comprising: capturing radar information (11) describing at least a part of an environment (6) of the first vehicle (1) in which the at least one second vehicle (5) is located, by a radar system (2) of the first vehicle (1) comprising multiple radar devices (3); determining a micro-Doppler information (12) describing at least one micro-Doppler signature in the captured radar information (11); determining a movement information (14) describing a movement of the at least one second vehicle (5); and providing the determined movement information (14). The radar system (2) captures the radar information (11) by using at least partially optical transmission techniques for radar system internal transmission of data between the individual radar devices (3) and a central control device (4) of the radar system (2).

## Description

The invention relates to a method to provide a movement information about at least one second vehicle by a first vehicle. Moreover, the invention relates to a radar system for a vehicle and a vehicle to perform such a method.

A vehicle may comprise at least one radar device configured to capture at least one object in an environment of the vehicle. Typically, the vehicle comprises multiple radar devices. The multiple radar device may be distributed around the vehicle. By the radar devices, the object is detectable even at conditions of bad sight, such as rain, fog, snow, dust and/or darkness. However, a resolution of a radar system that comprises multiple radar devices may be low compared to other environment sensor systems. Moreover, there may be time consuming data transmission and/or time consuming processing of radar information by the multiple individual radar devices.

DE 10 2016 001 772 A1 discloses a method for movement and behavior prognosis of objects in a vehicle environment based on radar information. The method may comprise a micro-Doppler analysis of radar information.

US 2021/0173055 A1 discloses a method to calibrate an imaging and ranging subsystem based on Doppler-data.

US 2021/0116914 A1 discloses a system and a method for localization of an autonomous vehicle based on three-dimensional point clouds. The point clouds are provided by a lidar scanning subsystem of the vehicle.

DE 10 2017 221 257 A1 discloses a radar system comprising a radar transmitting unit, a radar receiving unit, a central unit and a glass fiber connecting these units.

It is the object of the invention to quickly provide a movement information about a vehicle in an environment of another vehicle.

The independent claims solve the object.

A first aspect of the invention relates to a method to provide a movement information about at least one second vehicle by a first vehicle. The movement information describes a movement of the second vehicle. The movement information may, for example, describe a rotation and/or velocity of the second vehicle or another detail about its movement. The first vehicle and the second vehicle are two different vehicles. The first vehicle may alternatively be referred to as ego vehicle and the at least one second vehicle as other vehicle that differs from the ego vehicle. The first vehicle performs the method. In particular a radar system of the first vehicle performs the method.

The method comprises capturing a radar information describing at least a part of an environment of the first vehicle in which the at least one second vehicle is located. The radar information may describe, for example, the entire environment of the first vehicle or just the part of the environment. The part of the environment is a section or subarea of the environment. The part of the environment may comprise the environment in a front area, a rear area and/or at least one side area of the vehicle. The radar information may comprise radar data or may be referred to as radar data.

The radar system of the first vehicle captures the radar information. The radar system of a first vehicle comprises multiple radar devices. Each one of the multiple radar devices comprises, for example, at least one transmitting and/or receiving antenna and/or a control unit. The control unit may at least control the at least one transmitting and/or receiving antenna. Moreover, the radar system comprises a central control device that is at least configured to control the individual radar devices of the radar system.

There may be multiple second vehicles located in the environment of the first vehicle that may be described by the radar information. In case of multiple second vehicles the radar information may describe each one or at least some of the multiple second vehicles.

The method comprises determining a micro-Doppler information. The micro-Doppler information describes at least one micro-Doppler signature in the captured radar information. The micro-Doppler information is determined by applying a micro-Doppler determining algorithm on the captured radar information. The micro-Doppler determining algorithm comprises at least one rule that is applied on the captured radar information to detect the micro-Doppler signature in the captured radar information. The micro-Doppler signature is caused by the micro-Doppler effect that occurs during rotation of at least a part of a moving object. The rotating part of the moving object introduces a frequency shift in the echo captured by the at least one receiving antenna of the radar device due to the micro-Doppler effect. This is because the rotating part produces additional Doppler shifts, which are the micro-Doppler shifts or signatures, to the Doppler shifts produced by the movement of the object. These further shifts are useful to identify features of the moving object and to further analyze the movement of the moving object. Here, the moving object is the at least one second vehicle. The rotating part of this moving object may be, for example, a wheel of the second vehicle.

The method comprises determining a movement information describing a movement of the at least one second vehicle by applying a movement determining algorithm on the determined micro-Doppler information. The movement determining algorithm comprises at least one rule that is applied on the determined micro-Doppler information to determine the movement information. The movement of the at least one second vehicle is, for example, describable by a current velocity of the second vehicle. Thus, the determined movement information may describe the velocity of the second vehicle. To determine the velocity of the second vehicle as the movement information, for example, the micro-Doppler signatures of the radar information that describe the moving wheels of the second vehicle are analyzed.

The method comprises providing the determined movement information. For example, it may comprise providing the determined movement information to a function of the first vehicle. The function may be a driver assistance system, in particular for at least semi-automatic or even fully automatic driving of the vehicle. Thus, the determined movement information is actually used in the first vehicle, for example for the control of the first vehicle.

The radar system captures the radar information by using at least partially optical transmission techniques for at least a radar system internal transmission of data and/or information between the individual radar devices on one hand and a central control device of the radar system on the other hand. For example, the central control device may provide control commands for the radar devices, so that each radar device may transmit a specific electromagnetic wave towards the environment by its at least one transmitting antenna or transmitting and receiving antenna. The control commands are sent particularly fast to the radar devices if optical transmission techniques are used for at least a part of the transmission. Besides, each radar device may transmit the echo received by its receiving antenna or transmitting and receiving antenna to the central control device for further processing by using the optical transmission techniques. Thus, the echo is as well transmitted particularly fast. This increases a resolution of the radar system because multiple radar devices can be combined at high processing speed, for example compared to a classical radar system in which each radar device is controlled by an individual control unit and transmits its captured and/or analyzed data within the vehicle without using optical transmission techniques. Therefore, the described method is particularly fast and reliable so that, for example, real time movement information may be provided in the vehicle. The method hence allows to quickly provide the movement information about the second vehicle in an environment of the first vehicle.

The determining steps of the method and the following embodiments are preferably performed by the central control device of the radar system. This means that the central control device at least determines the micro-Doppler information and the movement information. It may as well determine further information described below.

An embodiment comprises that a function of the first vehicle receives the provided movement information. The function determines at least one control command for the first vehicle. The control command is in particular a control command for a drive system, a brake system and/or a steering system of the first vehicle. Then, the at least one control command may comprise instructions for a longitudinal and/or transversal guidance of the vehicle. The at least one control command is determined by applying a command determining algorithm on the received movement information. The command determining algorithm comprises at least one rule that is applied on at least the movement information and in particular on further sensor information available in the vehicle to determine the control demand for the first vehicle. The function then executes the determined control command. In other words, driving, braking and/or steering of the vehicle may be performed and controlled based on the movement information. If, for example, the movement information describes the movement of a second vehicle that is driving in front of the first vehicle on a neighboring lane of a road, the function may consider the received movement information to predict a movement of the second vehicle and to decide whether to increase or to decrease the velocity of the first vehicle and/or to change a driving direction of the first vehicle. The function may be a driver assistance system, such as, for example, an adaptive cruise command, a lane change assist, a lane change assistance, an emergency brake assist and/or a parking assist system.

Another embodiment comprises that a function of the first vehicle receives the provided movement information and verifies if an already determined control command for the first vehicle is executable by applying a verification algorithm on the received movement information. The already determined control command may be a control command for the drive system, brake system and/or steering system of the first vehicle. The already determined control command may be determined by the function and/or by a control device of the first vehicle, in particular prior to receiving the movement information. Preferably the already determined control command was determined independent of the movement information. The function that applies the verification algorithm may be the same function that applies the command determining algorithm or may differ from it.

The verification algorithm comprises at least one rule to decide whether the already determined control command should be executed considering the received movement information or if it should not be executed and hence discarded or overruled. If the already determined control command was found executable, the function executes the already determined control command. It is hence possible to check if the already determined control command should be executed by the first vehicle or not under consideration of the movement information. Only if this verification results in an executable already determined control command the function actually operates the first vehicle according to the already determined control command. This allows increases the reliability of the function.

A preferred embodiment comprises that the movement information at least describes the velocity of the at least one second vehicle. The velocity may alternatively be referred to as a speed of the at least one second vehicle. The determined velocity is in particular a current velocity determined based on the micro-Doppler signature of the radar information. The velocity may contribute to estimate how the second vehicle will move relative to the first vehicle, for example taking into account the first vehicle's own velocity.

According to a further embodiment, the movement information at least describes a jaw angle of the at least one second vehicle. The yaw angle describes a movement of the second vehicle around a height axis of the second vehicle (z-axis). The jaw angle describes a jaw rotation or rotation and hence a movement around the height axis pointing to the left or right in relation to a direction of motion of the second vehicle. The direction of motion is a driving direction of the second vehicle. In other words, the movement information may describe a movement of the second vehicle away from a straight forward or backward driving direction. By considering the jaw angle early, on information about possible lane changes of the second vehicle may be detected. This is particularly useful to decide, for example, if the second vehicle is potentially leaving its lane and may collide with the first vehicle.

Another embodiment comprises that the movement information at least describes the position and orientation of the at least one second vehicle with respect to the first vehicle. In other words, the movement information may describe a pose of the at least one second vehicle. The position may be described by coordinates, in particular in a coordinate system of the first vehicle. The orientation may be described by at least one angle, in particular with respect to an angle coordinate system of the first vehicle. At least the orientation may be determined based on the micro-Doppler information because an orientation of the wheels of the second vehicle influences the micro-Doppler signatures. Therefore, by comparing individual micro-Doppler signatures of different wheels of the second vehicle, in particular over time, it is possible to determine the orientation of the second vehicle. The position may be determined based on a distance information comprised by the radar information and/or under consideration of the micro-Doppler information. This supports a detailed analysis of the second vehicle and how it is located with respect to the first vehicle.

A further embodiment comprises that the radar system captures radar information over a predetermined time slot which is larger than 0. The movement information at least describes a velocity vector for the movement of the at least one second vehicle during the predetermined time slot. It is hence possible to, for example, observe the at least one second vehicle for the time slot (for example for several seconds) while continuously capturing radar information describing the second vehicle. Then, it is possible to determine the velocity vector meaning spatially differentiated velocity information that describes the velocity of the second vehicle in different spatial directions. In particular, the velocity vector describes changes in velocity in x-, y- and z-direction with respect to the coordinate system of the first vehicle. This provides information on a movement direction of the at least one second vehicle and is another helpful information to observe and/or predict future movements of the second vehicle.

Another embodiment comprises that the radar system captures radar information over a predetermined time slot which is larger than 0 so that the movement information at least describes an acceleration of the second vehicle during the predetermined time slot. In particular, the acceleration is described direction-dependent meaning that an acceleration in x-, y- and z-direction is described. The acceleration may be understood as a time dependent change of the velocity, in particular of the velocity vector. This further contributes to a better understanding of the movement of the at least one second vehicle. The time slot may be the same as the above-mentioned time slot or may differ from it.

According to an embodiment, the at least one micro-Doppler signature in the captured radar information describes the movement of the at least one wheel of the second vehicle. In a preferred example, the micro-Doppler signatures for all wheels that are within a coverage area of the radar system are described by the radar information. If, for example, both a front and a rear wheel of the second vehicle are within the coverage area of the radar system, the micro-Doppler information is determined for both wheels independently. The micro-Doppler information may be combined to determine the movement information of the second vehicle as a whole. This supports particularly well detection of changes in direction of the second vehicle.

Another preferred embodiment comprises that the radar system performs a pre-scan of the environment of the first vehicle to determine in which part of the environment at least one vehicle of interest is located. If, for example, the first vehicle is driving with an activated adaptive cruise control as function, it may be useful to observe an area in front of the vehicle when viewed in driving direction of the first vehicle. Besides, the vehicle of interest may be located ahead in driving direction on a neighboring lane. Therefore, vehicles ahead in driving direction and in front of and/or laterally to the first vehicle may be vehicles of interest in this example.

The embodiment comprise adjusting a field of view of the radar system so that it covers at least the determined part of the environment in which the at least one vehicle of interest is located. As a result, the captured radar information describes the determined part of the environment and hence the at least one vehicle of interest, which is then the at least one second vehicle. In particular, only radar information from the determined part are captured and considered to determine the micro-Doppler information. In other words, the method comprises the pre-scan to determine a required field of view of the radar system by identifying the part of the environment with the vehicle of interest. The radar system is then adjusted to the required field of view. The environment described by the radar information is thus adaptable depending on a situation of the first vehicle.

If, for example, the radar system comprises radar devices which are located all around the vehicle, it is possible to select some of the radar devices for capturing radar information, whereas other radar devices may not contribute to the captures radar information because they cannot describe the vehicle of interest and hence the at least one second vehicle. These other radar device may be paused or their radar information may remain unconsidered. Preferably, the part of the environment that comprises the vehicle of interest is located in the front of the vehicle when viewed in driving direction. Then, for example, the radar information captured by radar devices on a side and/or a rear of the first vehicle may remain unconsidered. The pre-scan hence allows to reduce an amount of radar information that has to be captured and considered to determine the micro-Doppler information and then the movement information. This further decreases the amount of time necessary to perform the method.

Moreover, the radar system may adjust a coverage area of the radar system accordingly meaning dependent on the pre-scan and the vehicle of interest. This adjustment may select a maximal range, an opening angle in azimuth and/or an opening angle in elevation of the radar system, so that the radar system covers the entire determined part of the environment.

Another embodiment comprises that at least one glass fiber at least in sections connects the central control device and the individual radar device of the radar system. The at least one glass fiber enables the radar system internal transmission of data and/or information which is optically encoded. The optically encoded data, such as control commands for the radar devices and/or captured radar information, may be coupled into the at least one glass fiber and transmitted via the at least one glass fiber. In particular, all internal communication between each one of the radar devices on one hand and the central control device on the other hand runs through the glass fiber, in particular through multiple glass fiber. This clarifies how the optical transmission of data can be achieved in a reliable way.

Another embodiment comprises that the central control device comprises an optical transmitting unit. The optical transmitting unit provides an optically encoded control command for the respective radar device. It may comprise at least one control command for each one of the multiple radar devices. The control commands may differ from one another or may be the same. The optical transmitting unit couples the optically encoded control command into the at least one glass fiber that connects the central control device and the radar device for which the control command was determined. The respective radar device comprises an optical receiving unit that receives the optically encoded control command and converts it into an electronically encoded control command. The respective radar device transmits electromagnetic waves according to the electrically encoded control command that was encoded by the optical receiving unit. For example, the control command that was first transmitted optically and then converted into the electrically encoded control command comprises a frequency, a beam size, a beam direction and/or another setting for the electromagnetic waves that should be transmitted by the transmitting antenna or the transmitting and receiving antenna of the radar device. In the described way, each of the multiple radar devices receives its control command particularly fast and executes it.

Preferably each radar device only comprises one transmitting antenna so that only control commands for this one transmitting antenna are provided in the described way. The transmitting antenna may be a transmitting and receiving antenna. However, the radar device may comprise multiple transmitting antennas and/or transmitting and receiving antenna. In this case, the control command is provided for each antenna individually and/or as a combined control command.

Another embodiment comprises that the respective radar device comprises an optical modulation unit. The optical modulation unit converts received echo or echoes into an optically encoded echo information and couples it into the at least one glass fiber. The respective echo is created when the transmitted electromagnetic waves are reflected on an object in the environment, wherein the object is here the at least one second vehicle, in particular the at least one wheel of the second vehicle. The echo hence describes the second vehicle. The received echo is converted into an optically encoded echo information that is transmitted to the central control device by means of the glass fiber. The central control device comprises an optical receiving unit and an evaluation unit. The optical receiving unit receives the optically encoded echo information from the glass fiber and the evaluation unit evaluates the optically encoded echo and outputs the radar information derived therefrom. This means that the radar information that is used by the method was first transmitted as an optically encoded information and is then back transformed into data that is suitable for further processing by the central control device. This explains how the optical transmission of data within the radar system is performed to decrease transmission times in the radar system.

Another embodiment comprises that the optically encoded control command is created by modulating the control command on a predetermined optical carrier frequency. In particular, the control command is modulated with a predetermined fraction of the frequency of the transmitted electromagnetic wave. Alternatively or additionally, the optically encoded echo information is created by modulating the received echo on the predetermined optical carrier frequency. In particular, it is modulated with the predetermined fraction of the frequency of the received echo. In a preferred example, the fraction is 1 to 8. This describes how the conversion between optically encoded and electronically encoded data is achieved in the sense of the invention.

For use cases or use situations which may arise during the method and which are not explicitly described here, an error message and/or a request for user feedback may be provided and/or output. Alternatively or additionally, a default setting and/or a predetermined initial state is set in accordance with the method.

An algorithm in the sense of the invention may alternatively be referred to as a model or a process.

Another aspect of the invention relates to a radar system for a vehicle. The radar system comprises multiple radar devices and the central control device. The radar system is configured to perform the above-described method. It performs the above-described method.

In a preferred embodiment, the inventive radar system may be a radar system as described in document DE 10 2017 221 257 A1. Features described there may be considered as embodiments of the inventive method and/or radar system.

A further aspect of the invention relates to a vehicle with the above-described radar system. The vehicle is preferably a motor vehicle, for example, a passenger car, a truck, a bus, a motorcycle and/or a moped.

A preferred embodiment of the inventive vehicle comprises that the radar system comprises multiple radar devices that are spatially distributed around the entire vehicle. In particular, there are multiple radar devices in different locations when viewed in height direction, length direction and/or width direction of the vehicle. Thus, the radar information may capture a 360 degree point cloud of the entire environment of the vehicle.

The central control device may be a processor unit. It may comprise at least one microprocessor, microcontroller, FPGA (Field Programmable Gate Array) and/or DSP (Digital Signal Processor). Furthermore, it may comprise program code. The program code may be stored in a data memory of the central control device.

The embodiments described in connection with the method, both individually and in combination with each other, apply accordingly, when applicable, to the inventive radar device and vehicle. The invention comprises combinations of the described embodiments.

Examples of embodiments of the invention are described below. Thereby show:
- Fig. 1: a schematic representation of a vehicle with a radar system,
- Fig. 2: a schematic representation of the concept of the inventive method,
- Fig. 3: a schematic representation of movement directions of wheels of a vehicle,
- Fig. 4: a schematic representation of steps of a method to provide a movement information about at least one second vehicle by a first vehicle, and
- Fig. 5: a schematic representation of a radar system for a vehicle.

The embodiment explained below are preferred embodiments of the invention. In the embodiments, the described components each represent individual features of the invention which are to be considered independently of each other, which also further form the invention independently of each other and are thus also to be regarded as part of the invention individually or in a combination other than that shown. Furthermore, the described embodiments can also be supplemented by further features of the invention already described.

In the figures, same components are labeled with the same reference signs.

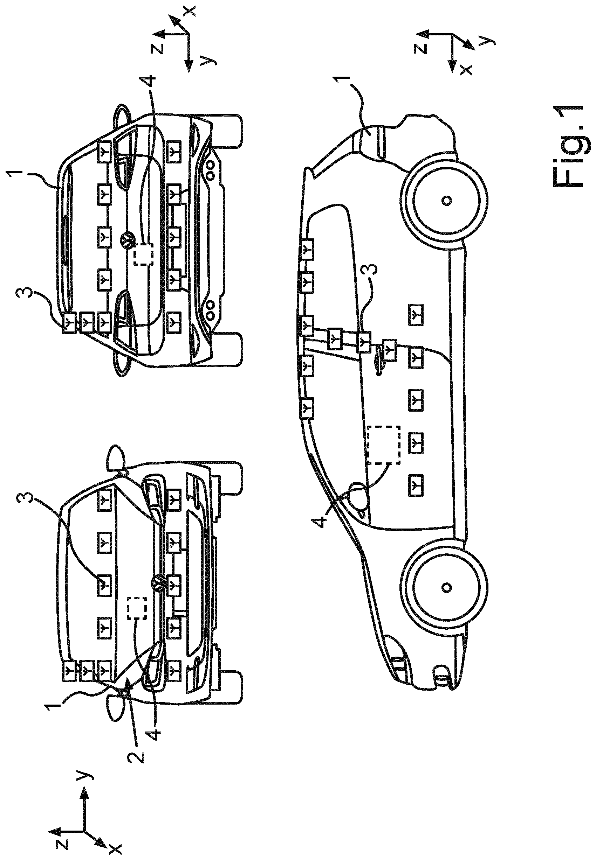

Fig. 1 shows a first vehicle 1 from different perspectives so that a front, rear and a side of the first vehicle are shown. The first vehicle 1 comprises a radar system 2. The radar system comprises multiple radar devices 3. The radar devices 3 are preferably spatially distributed around the first vehicle 1. In a preferred example, they are located at different positions when viewed in a height direction (z-direction), a length direction (x-direction) and/or a width direction (y-direction) of the first vehicle 1. The individual radar devices 3 may, for example, be located at an A, B, C or D pillar of the first vehicle 1. In particular, at least some of the radar device 3 may be located at a bumper of the first vehicle 1 and/or in a bottom area of a windshield and/or a rear window of the first vehicle 1. Moreover, at least some radar devices 3 may be located at a roof of the first vehicle 1. The sketched positions of the individual radar devices 3 are exemplarily. More, less and/or otherwise located radar devices 3 are possible.

The radar system 2 comprises a central control device 4. For example, the central control device 4 may provide control commands for the individual radar devices 3 of the first vehicle 1 and or perform processing tasks.

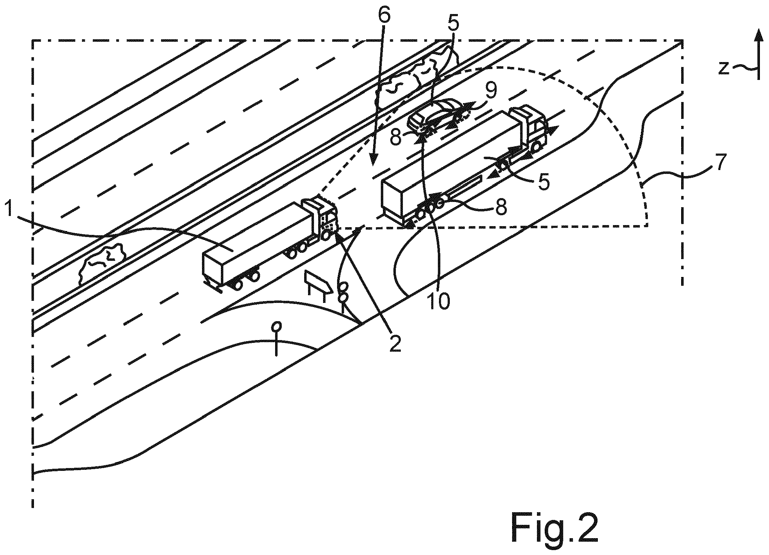

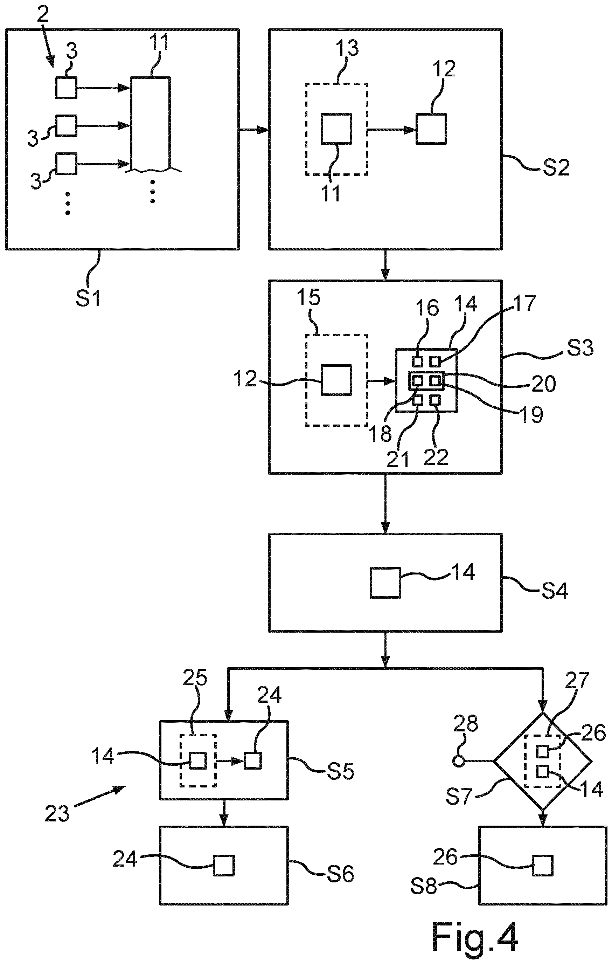

Fig. 2 shows the main idea of the invention. The first vehicle 1 comprises the radar system 2 which at least comprises radar devices 3 at its front. The radar system 2 is configured to capture a radar information 11 (see reference sign 11 in Fig. 4) that describes at least a part of an environment 6 of the first vehicle 1. In the environment 6 at least one second vehicle 5 is located. Here, there is a passenger car as second vehicle 5 as well as a truck as another second vehicle 5. A coverage area 7 of the radar system 2 in the front is sketched as well.

The captured radar information comprises information about the movement of the second vehicle 5 and of the rotation of wheels 8 of the second vehicles 5. A movement at the top of the wheel 8 when viewed in height direction is sketched with a first arrow 9. This movement is a forward movement when viewed in driving direction of the first vehicle 1. A movement at the bottom of the wheel 8 when viewed in height direction is sketched with a second arrow 10. This movement is a backward movement when viewed in driving direction of the first vehicle 1. The first arrows 9 are sketched with a continuous line and the second arrows 10 with dashed lines. The rotation of the wheel 8 and the sketched movements may be determined when considering the micro-Doppler effect because they influence a micro-Doppler signature in the captured radar information 11.

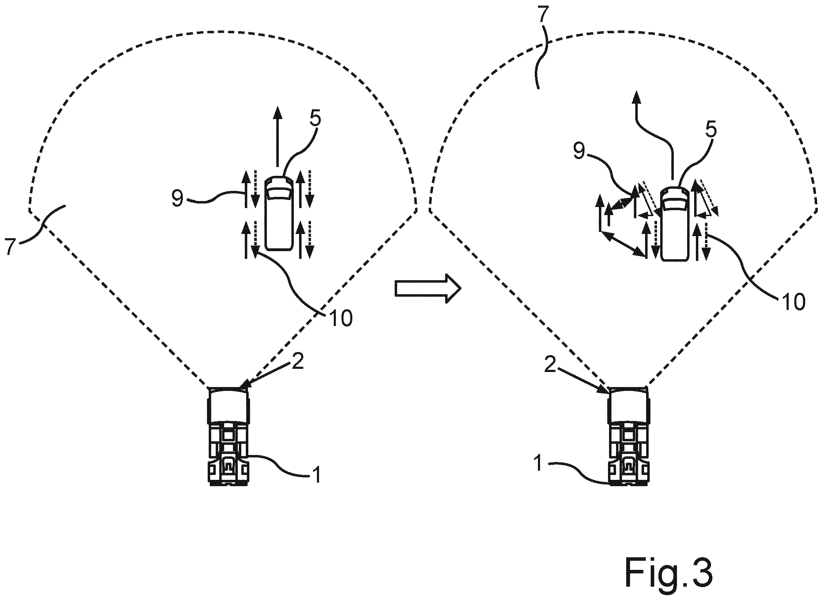

Fig. 3 shows that considering the movement directions and hence the arrows 9, 10 of the second vehicle 5 may at least contribute to identify a driving direction of the second vehicle 5. On the left side, the second vehicle 5 is driving straight forward and therefore the arrows 9, 10 show a maximum length. On the right side, at least the front wheels 8 of the second vehicle 5 are steered towards the left with respect to the driving direction. Therefore, the length at least of the first arrow 9 is decreased compared to the first arrow 9 for the straight forward movement of the respective wheel 8. When calculating a velocity or another detail about the movement of the second vehicle 5 based on the radar information 11, it may be possible to also determine a driving direction of the second vehicle 5.

Fig. 4 shows individual steps of a method to provide a movement information 14 about the at least one second vehicle 5 by the first vehicle 1. The method is performed by the first vehicle 1, more precisely by the radar system 2 of the first vehicle 1. The method comprises in a step S1 capturing the radar information 11 describing at least a part of the environment 6 of the first vehicle 1 wherein in this part of the environment 6 the at least one second vehicle 5 is located. The radar system 2 comprises multiple radar devices 3. As an example, three radar devices 3 are sketched in Fig. 4. More radar devices 3 are possible. The more radar devices 3, the higher may be the resolution of the radar information 11.

In a step S2, the method may comprise determining a micro-Doppler information 12 that describes at least one micro-Doppler signature in the captured radar information 11. A micro-Doppler determining algorithm 13 is applied on the captured radar information 11 to determine the micro-Doppler information 12.

A step S3 may comprise determining the movement information 14 that describes a movement of the at least one second vehicle 5. It is determined by applying a movement determining algorithm 15 on the determined micro-Doppler information 12. In a step S4, the determined movement information 14 may be provided, for example to a function 23 of the first vehicle 1.

The movement information 14 may describe multiple individual information. For example, it may describe at least a velocity 16 of the at least one second vehicle 5, and/or a jaw angle 17 of the at least one second vehicle 5, and/or a position 18 and/or an orientation 19 of the at least one second vehicle 5 with respect to the first vehicle 1. The position 18 and/or orientation 19 may be referred to as a pose 20 of the second vehicle 5. Alternatively or additionally, the movement information 14 may at least describe a velocity vector 21 for the movement of the at least one second vehicle 5 during a predetermined time slot that is larger than 0. In this case the radar system 2 captures radar information 11 over at least the predetermined time slot. Alternatively or additionally, the movement information 14 may at least describe an acceleration 22 of the second vehicle 5 during that predetermined time slot. In particular, the acceleration 22 is described depending on a direction and hence differentiates in x-, y- and z-direction.

The at least one micro-Doppler signature in the captured radar information 11 may describe the movement of the at least one wheel 8 of the second vehicle 5. It is possible to determine that a specific micro-Doppler signature shows the movement of the specific wheel 8 by considering image data captured by a camera of the first vehicle 1 and analyzing the image data with respect to the radar information. Alternatively or additionally, the micro-Doppler signature may be typical for wheels of vehicles 1, 5 and may be identified by the typical signature. Alternatively or additionally, the wheel 8 may be tracked over multiple captured radar information 11 and identified by comparing the multiple captured radar information 11.

A step S5 may comprise that the function 23 receives the provided movement information 14. The function 23 may determine at least one control command 24 for the first vehicle 1 by applying a command determining algorithm 25 on the received movement information 14. The control command 24 is in particular configured for a drive system, a brake system and/or a steering system of the first vehicle 1. In a step S6 the function 23 may execute the determined control command 24.

Alternatively or additionally, the function 23 may receive the provided movement information 14 and may use it to verify if an already determined control command 26 for the first vehicle 1 is executable. This is achieved by applying a verification algorithm 27 on the received movement information 14 in a step S7. Here, the already determined control command 26 is in particular intended for the drive system, the brake system and/or the steering system of the first vehicle 1. In a step S8 in case the already determined control command 26 is executable, the function 23 executes the already determined control command 26. The verification algorithm 27 is here applied on the received movement information 14 and on the already determined control command 26. In case the already determined control command 26 is found not-executable in step S7, the method may be terminated 28.

The radar system 2 may perform a pre-scan of the environment 6 of the first vehicle 1 to determine, in which part of the environment 6 at least one vehicle of interest is located. It may then adjust a field of view of the radar system 2 so that it covers at least the determined part of the environment 6 so that the captured radar information 11 describes the at least one vehicle of interest as the at least one second vehicle 5. The pre-scan may be performed prior to step S1. The field of view is here the coverage area 7 sketched in Fig. 2 and Fig. 3.

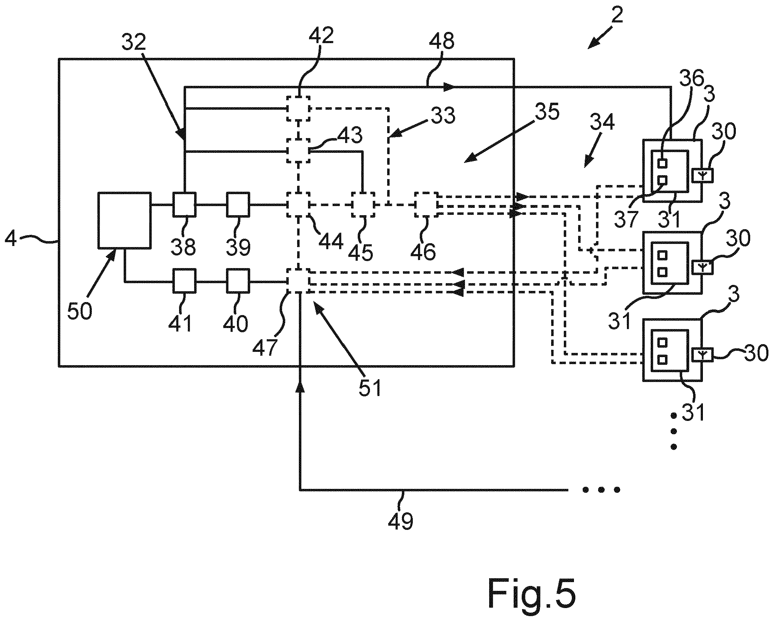

Fig. 5 shows in more detail the radar system 2. Each one of the multiple radar devices 3 comprises at least one transmitting and/or receiving antenna 30 as well as a control unit 31. The control unit 31 is preferably a chip to, for example, control the at least one antenna 30. In a preferred embodiment, the control unit 31 is an electronic-photonic co-integrated chip (EPIC).

The radar system 2 captures the radar information 14 by using optical transmission techniques for radar system internal transmission of data and/or information between the individual radar devices 3 on one hand and the central control device 4 of the radar system 2 on the other hand. Here, all data transmission based on optical transmission techniques and hence optically encoded data connections and/or transmissions is sketched with dashed lines 32. All electronically encoded data transfer via electronic channels is sketched with continuous lines 33. Components sketched with dashed outlines are optical components whereas components with continuous outlines are electronic components.

At least one glass fiber 34 at least in sections may connect the central control device 4 and the individual radar devices 3 and enables the radar system internal transmission of data and/or information with optical transmission techniques.

The central control device 4 may comprise an optical transmitting unit 35 that may provide an optically encoded control command for the respective radar device 3 and may couple it as an optically encoded control command into the at least one glass fiber 34. The respective radar device 3 may comprise an optical receiving unit 36 that may receive the optically encoded control command and may convert it into an electronically encoded control command. Based on this electronically encoded control command the respective radar device 3 may transmit electromagnetic waves according to the electronically encoded control command in the environment 6 of the first vehicle 1.

The respective radar device 3 may comprise an optical modulation unit 37 that may convert the received echoes that are received when the electromagnetic waves are reflected on an object in the environment 6 such as the at least one second vehicle 5, and may convert it into an optically encoded echo information. The optically encoded echo information may be coupled into the at least one glass fiber 34. The central control device 4 may comprise an optical receiving unit 51 and an evaluation unit 50. The optical receiving unit 51 may receive the optically encoded echo information and the evaluation unit 50 may evaluate it and may output the radar information 11 derived therefrom. This is then the captured radar information 11.

Fig. 5 shows individual components to perform the described transformation and evaluation steps in more detail. The electronic components are hereby, for example, a control interface 38, an optional arbitrary waveform generator (AWG) 39 for laser modulation, a digital interface 40, in particular for an analog-digital converter (ADC), and/or a low level signal processing unit 41 to perform a fast-Fourier transformation. Moreover, an evaluation unit 50 may at least comprise a computing unit, in particular a central processing unit (CPU), a graphical processing unit (GPU) and/or a personal computer (PC) interface.

The optical components may be an optional feedback loop/control unit 42, a laser and/or interfering radiation source module 43, a gigahertz frequency synthesis module 44, an optical control module 45, an optical switch 46 and/or an optical detection/homodyne/heterodyne detection unit 47, including phase and/or length measurement. Moreover, Fig. 5 shows electronic output channels 48 to the control units 31 and an electronic back channel 49.

The optically encoded control command may be created by modulating the control command on a predetermined optical carrier frequency, in particular with a predetermined fraction of the frequency of the transmitted electromagnetic wave. Alternatively or additionally, the optical encoded echo information may be created by modulating the received echo on the predetermined optical carrier frequency, in particular with a predetermined fraction of the frequency of the received echo.

The central control device 4 may generate the optical carrier signal. This is fed into the gigahertz frequency synthesis module 44 and the synthesized gigahertz signal is forwarded in the optical spectral range via the glass fiber 34 to the control unit 31 (EPIC chips) to be emitted as a 77 gigahertz signal, for example. Signal detection takes place the other way round. All data is processed at the central control device 4.

In summary, the invention shows a micro-Doppler based jaw angle detection and pose detection for the first vehicle 1. Reliable detection and monitoring of, for example, lane guidance of dynamic objects in the vehicle's field of vision is possible.

The underlying problems are:
i. Reliable monitoring of the driving behavior of vehicles 1, 5
ii. Automated adaptation of own vehicle guidance depending on the monitored driving behavior of surrounding vehicles 5.

The used approach is:
i. Use miniaturized, phontonically co-integrated radar chips in a coherently distributed, thinned array which is integrated into the first vehicle 1 over a large area (radar system 2);
ii. Online adjustment of the unobstructed field of view of the array and successive enlargement of this during the driving maneuver with the aim of detecting the environment required for the maneuver;
iii. Registration of successive radar point clouds to derive yaw, roll and pitch angles and their current pose
iv. Prediction of possible driving maneuvers of detected vehicles 5 to safeguard the first vehicle 1.

Advantages of the invention are: cost savings; gain in comfort; accident prevention; improved reliability regardless of weather conditions.

The safest possible perception of the surroundings (environment 6) is essential for automated driving. The surroundings are detected with the help of sensors such as radar, lidar and cameras. A holistic 360-degree, three-dimensional detection of the environment 6 is particularly important, so that all static and dynamic objects are detected. Lidar in particular has played a key role in redundant, robust environment detection in past research projects, as this type of sensor can measure distances precisely in environment detection and can also be used for classification. However, these sensors are cost-intensive and complex to set up. In particular, 360-degree, three-dimensional environment detection is problematic, as either many smaller individual sensors are required to ensure this, which generally work with many individual light sources and detector elements, or large sensors are installed. Furthermore, such Lidar systems are susceptible to weather influences such as rain, fog or direct sunlight.

Radar sensors have been established in the automotive sector for years and provide reliable and fail-safe data in all weather conditions. Even poor visibility conditions such as rain, fog, snow, dust and darkness hardly affect their perception reliability. However, their resolution has so far been limited. Standard radars in use have a resolution of approximately 2 degrees. In order to meet the requirements for levels 4 and 5 of automated driving with safe driving function, radar sensors must provide three-dimensional images with high resolution in the range of 0.1 degree and below with a high degree of insensitivity to interference from their surroundings. This cannot be achieved with conventional radar technology, as the resolution of such systems is too low.

Current developments in photonic radar systems 2 to increase resolution are based on the co-integration of electronic and photonic components in a single semiconductor. The generation of a frequency modulated continuous wave (FMCW) signal, as well as the entire signal processing and evaluation, are carried out by a central station (central control device 4). Each transmitter and receiver module (radar device 3) comprises an electronic-photonic co-integrated chip (so-called "EPIC chip") as control unit 31. Silicon photonics technology is used for co-integration. This enables the monolithic integration of photonic components, highfrequency electronics and digital electronics together on one chip ("electronic-photonic co-integration"). The technical innovation of such a system lies in the signal transmission of gigahertz signals by means of an optical carrier signal in the terahertz frequency range. A central station (central control device 4) generates an optical carrier frequency (terahertz). The signal to be transmitted is modulated to this frequency at 1/8 of the radar frequency and sent to the antenna chips via optical fiber (glass fiber 34). Frequency multiplication takes place on these so that the radar radiation can be emitted by the antenna chips. Signal detection takes place in the opposite direction. All data is processed by the central control device 4.

The principle of electronic-photonic co-integration in a chip, with silicon-on-insulator regions for the photonic components and bulk silicon regions for the electronic circuits can be used to achieve high signal quality with low parasitic interference, particularly at high data rates. The connection of the radio frequency (RF) circuits for the radar antennas 30, including frequency multipliers, to the optical transceiver can be implemented without additional wire or flip-chip bonding. In addition, chips can be optically and electrically tested at wafer level, enabling a high yield to be achieved in further module construction. Extremely compact form factors can be realized with this technology, making it highly relevant for the application of optical technologies based on silicon photonics in the automotive industry.

The obstacle to the productive use of glass fibers 34 lies in the lack of scalability of technologies available to date. This scalability to large volumes is made possible by the technology for highly integrated production of electronic photonic integrated circuits. The result is a significant cost reduction in assembly technology and a more efficient cost structure. Comprehensive libraries for electronic and photonic components for data transmission at high bandwidths are available from the development of data center solutions.

The inventive method comprises:
1. Fully coherent radar devices 3 in three dimensions and distributed 360 degrees around the first vehicle 1.
2. Detection of the environment 7 by the radar system 2.
3. Determination of the field of vision and identification of the field of view required for the maneuver.
4. Detection of the micro-Doppler.
5. Tracking micro-Doppler.
6. Differential measurement of the resulting velocity vector 21 if necessary.
7. If necessary, gradient determination of the resulting velocity vector 21 based on the micro-Doppler frequency measurements.
8. Yaw angle 17 and pose 20 determination of the second vehicle 5.
9. Detection environment.
10. Decision driving maneuvers feasible.
11. Transfer data to advanced driver assistance function 23.

### Reference sign list

- 1: First vehicle
- 2: Radar system
- 3: Radar device
- 4: Central control device
- 5: Second vehicle
- 6: Environment
- 7: Coverage area
- 8: Wheel
- 9: First arrow
- 10: Second arrow
- 11: Radar information
- 12: Micro-Doppler information
- 13: Micro-Doppler determining algorithm
- 14: Movement information
- 15: Movement determining algorithm
- 16: Velocity
- 17: Jaw angle
- 18: Position
- 19: Orientation
- 20: Pose
- 21: Velocity vector
- 22: Acceleration
- 23: Function
- 24: Control command
- 25: Command determining algorithm
- 26: Already determined control command
- 27: Verification algorithm
- 28: Termination
- 30: Antenna
- 31: Control unit
- 32: Dashed lines
- 33: Continuing lines
- 34: Glass fiber
- 35: Optical transmitting unit
- 36: Optical receiving unit
- 37: Optical modulation unit
- 38: Control interface
- 39: Optional arbitrary waveform generator
- 40: Digital interface
- 41: Low level signature processing unit
- 42: Feedback loop/control unit
- 43: Laser and/or interfering radiation source module
- 44: Gigahertz frequency synthesis module
- 45: Optical control module
- 46: Optical switch
- 47: Optical detection/homodyne/heterodyne detection unit
- 48: Electronic output channel
- 49: Electronic back channel
- 50: Evaluation unit
- 51: Optical receiving unit
- S1 - S8: steps

## Claims

1. Method to provide a movement information (14) about at least one second vehicle (5) by a first vehicle (1), comprising:
- capturing radar information (11) describing at least a part of an environment (6) of the first vehicle (1) in which the at least one second vehicle (5) is located, by a radar system (2) of the first vehicle (1) comprising multiple radar devices (3);
- determining a micro-Doppler information (12) describing at least one micro-Doppler signature in the captured radar information (11) by applying a micro-Doppler determining algorithm (13) on the captured radar information (11);
- determining a movement information (14) describing a movement of the at least one second vehicle (5) by applying a movement determining algorithm (15) on the determined micro-Doppler information (12); and
- providing the determined movement information (14);
wherein the radar system (2) captures the radar information (11) by using at least partially optical transmission techniques for radar system internal transmission of data and/or information between the individual radar devices (3) and a central control device (4) of the radar system (2).

2. Method according to claim 1, wherein a function (23) of the first vehicle (1) receives the provided movement information (14), determines at least one control command (24) for the first vehicle (1), in particular for a drive system, brake system and/or steering system of the first vehicle (1), by applying a command determining algorithm (25) on the received movement information (14), and executes the determined control command (24).

3. Method according to claim 1 or 2, wherein a function (23) of the first vehicle (1) receives the provided movement information (14), verifies if an already determined control command (26) for the first vehicle (1), in particular for a drive system, brake system and/or steering system of the first vehicle (1), is executable by applying a verification algorithm (27) on the received movement information (14) and the already determined control command (26), and only if this is the case executes the already determined control command (26).

4. Method according to any one of the preceding claims, wherein the movement information (14) at least describes a velocity (16) of the at least one second vehicle (5).

5. Method according to any one of the preceding claims, wherein the movement information (14) at least describes a yaw angle (17) of the at least one second vehicle (5).

6. Method according to any one of the preceding claims, wherein the movement information (14) at least describes a position (18) and/or orientation (19) of the at least one second vehicle (5) with respect to the first vehicle (1).

7. Method according to any one of the preceding claims, wherein the radar system (2) captures radar information (11) over a predetermined time slot larger than 0 so that the movement information (14) at least describes a velocity vector (21) for the movement of the at least one second vehicle (5) during the predetermined time slot.

8. Method according to any one of the preceding claims, wherein the radar system (2) captures radar information (11) over a predetermined time slot larger than 0 so that the movement information (14) at least describes an acceleration (22) of the second vehicle (5) during the predetermined time slot, in particular direction-dependent.

9. Method according to any one of the preceding claims, wherein the at least one micro-Doppler signature in the captured radar information (11) describes a movement of at least one wheel (8) of the second vehicle (5).

10. Method according to any one of the preceding claim, wherein the radar system (2) performs a pre-scan of the environment (6) of the first vehicle (1) to determine, in which part of the environment (6) at least one vehicle of interest is located, and adjusts a field of view of the radar system (2) so that it covers at least the determined part of the environment (6) so that the captured radar information (11) describes the at least one vehicle of interest as the at least one second vehicle (5).

11. Method according to any one of the preceding claims, wherein at least one glass fiber (34) at least in sections connects the central control device (4) and the individual radar devices (3) and enables the radar system internal transmission of data and/or information.

12. Method according to claim 11, wherein the central control device (4) comprises an optical transmitting unit (35) that provides an optically encoded control command for the respective radar device (3) and couples the optically encoded control command into the at least one glass fiber (34), wherein the respective radar device (3) comprises an optical receiving unit (36) receiving the optically encoded control command and converting it into an electrically encoded control command, so that the respective radar device (3) transmits electromagnetic waves according to the electrically encoded control command.

13. Method according to claim 11 or 12, wherein the respective radar device (3) comprises an optical modulation unit (37) that converts a received echo into an optically encoded echo information and couples it into the at least one glass fiber (34), wherein the central control device (4) comprises an optical receiving unit (51) and an evaluation unit (50), wherein the optical receiving unit (51) receives the optically encoded echo information and the evaluation unit (50) evaluates it and outputs the radar information (11) derived therefrom.

14. Radar system (2) for a vehicle (1, 5) comprising multiple radar devices (3) and a central control device (4), wherein the radar system (2) is configured to perform a method according to any one of the claims 1 to 13.

15. Vehicle (1, 5) with a radar system (2) according to claim 14, wherein in particular the multiple radar devices (3) are spatially distributed around the entire vehicle (1, 5).
